# FASCICULE DE BREVET EUROPEEN

(11) **EP 3 184 966 B1**
(45) Date de publication et mention de la délivrance du brevet: **06.11.2019**
(21) Numéro de dépôt: 16204358.2
(22) Date de dépôt: 15.12.2016
(51) Int. Cl.: G08G 5/00, G06T 17/05, B64D 45/00, G01C 23/00, G08G 5/02

(54) **PROCÉDÉ DE REPRÉSENTATION GRAPHIQUE TRIDIMENSIONNELLE D'UN AXE DE PISTE D'ATTÉRRISSAGE**
GRAFISCHES 3D-DARSTELLUNGSVERFAHREN EINER ACHSE EINER LANDEBAHN
METHOD FOR THREE-DIMENSIONAL GRAPHICAL REPRESENTATION OF A RUNWAY AXIS

(30) Priorité: 23.12.2015 FR 1502675
(43) Date de publication de la demande: 28.06.2017
(73) Titulaire: Thales, 92400 Courbevoie (FR)
(72) Inventeur: MONVOISIN, Emmanuel, 33187 Le Haillan Cedex (FR); GANILLE, Thierry, 33187 Le Haillan Cedex (FR); LUX, Johanna, 33187 Le Haillan Cedex (FR); MARIANI, Pierre, 33187 Le Haillan Cedex (FR)
(74) Mandataire: Bréda, Jean-Marc

(56) Documents cités:
- US-B1- 7 295 901
- US-B1- 8 099 202

## Description

Le domaine de l'invention est celui des interfaces homme-système pour des applications aéronautiques, et plus particulièrement celui des systèmes de visualisation synthétiques comportant des moyens d'afficher une image synthétique tridimensionnelle du paysage extérieur.

Les aéronefs modernes possèdent généralement un système de vision synthétique dit « SVS », acronyme de « Synthetic Vision System ». Ce système permet de présenter à l'équipage une image synthétique du paysage extérieur comportant généralement des informations sur le pilotage ou la navigation.

Un système SVS comporte une base de données cartographique représentative du terrain survolé, un système de géolocalisation, des moyens de calcul électroniques et un ou plusieurs dispositifs de visualisation implantés dans le cockpit de l'aéronef. Le système de géolocalisation est du type « GPS », acronyme de « Global Positioning System ». Il peut être couplé avec le système inertiel de l'appareil. L'ensemble du système de géolocalisation fournit au moins les paramètres suivants : position de l'aéronef en latitude, longitude et altitude et orientation de l'aéronef en tangage, roulis et cap.

Généralement, l'image est affichée sur les écrans de visualisation qui se trouvent en face avant du tableau de bord de l'aéronef. L'image est une vue tridimensionnelle de l'extérieur représentée de la façon la plus réaliste possible. Le point de vue affiché est dans l'axe de l'appareil.

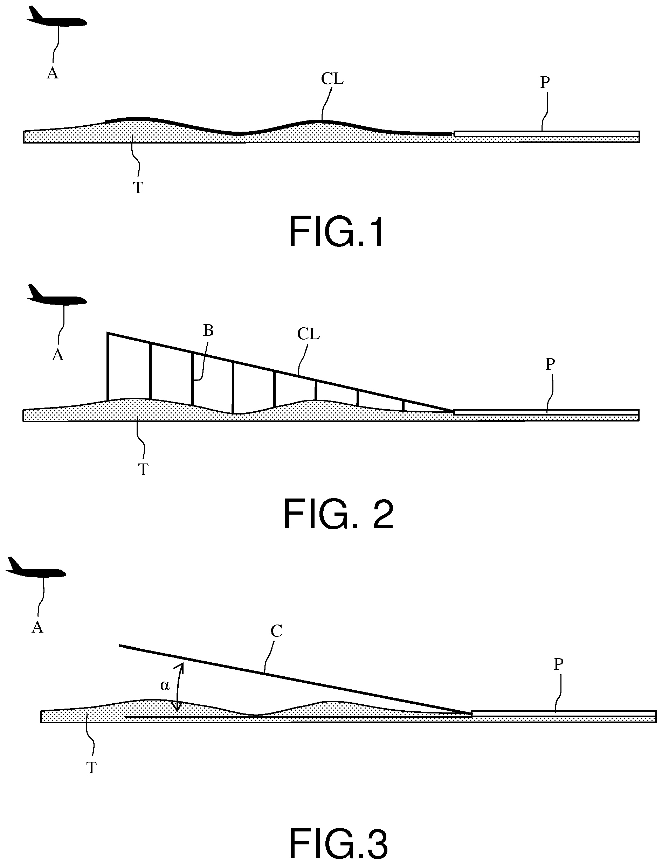

Cette image synthétique comporte généralement une symbologie d'aide au pilotage et à la navigation. En phase d'approche d'une piste d'atterrissage, cette symbologie comporte des informations permettant d'aider à la stabilisation en approche et à la comparaison avec le plan de descente pour les pilotes. Cette aide prend la forme d'une extension de l'axe de piste, encore appelée « extended runway centerline » ou « extended centerline » ou plus simplement « centerline ». Dans la suite de la description, cet axe étendu ou prolongé est noté axe de piste ou « centerline ». Le brevet US 7 463 954 intitulé « Terrain augmented symbology » décrit une extension de l'axe de piste épousant le terrain. La figure 1 illustre cette solution. Elle représente un plan de coupe vertical d'un terrain T survolé par un aéronef A. Ce terrain comporte une piste d'atterrissage P. La centerline CL est une ligne représentée en traits gras sur cette figure.

Les inconvénients de cette solution sont qu'il peut y avoir des artefacts visuels très gênants comme des phénomènes de papillotement, plus connus sous le terme anglais de « flickering » dus au plaquage de cette ligne sur le terrain. La centerline peut être également masquée par des accidents de terrain qui se trouve entre le porteur et la centerline. Dans ce cas, elle perd une grande partie de son intérêt.

Une seconde solution est décrite dans le brevet US 8 099 202 intitulé « System and method for providing a final approach curtain », qui décrit un « rideau » composé de bandes verticales symbolisant la centerline. La figure 2 illustre cette seconde solution. Elle représente un plan de coupe vertical d'un terrain T survolé par un aéronef A. Ce terrain comporte une piste d'atterrissage P. La centerline CL est un pan incliné composé de bandes B verticales représentées en traits gras sur cette figure. L'inconvénient est que cette représentation prend beaucoup de place et peut masquer des informations par un effet de surcharge, plus connus sous le terme anglais de « cluttering ».

Le procédé selon l'invention ne présente pas ces inconvénients. La centerline est un segment de droite incliné d'une faible pente et disposé dans l'axe de la piste. Plus précisément, l'invention a pour objet un procédé de représentation graphique tridimensionnelle d'une piste d'atterrissage (P) sur un écran de visualisation d'un système de visualisation de bord pour aéronef (A), ladite représentation graphique étant affichée dans une vue synthétique d'un paysage extérieur, caractérisé en ce que ladite représentation graphique comporte un ruban (C) disposé dans l'axe d'approche de la piste d'atterrissage, ledit ruban étant un ruban droit incliné d'un angle (α) valant 1 degré par rapport à l'horizontale, ledit ruban commençant au seuil de la piste d'atterrissage et étant situé sous l'axe d'approche de l'aéronef.

Avantageusement, ledit ruban est représenté en pointillés, la distance entre deux pointillés étant constante et comprise entre 0,1 et 10 miles nautiques (0,185 et 18,5 km).

Avantageusement, ledit ruban comporte plusieurs graduations équidistantes.

Avantageusement, les graduations sont de forme identique ou de forme différente.

Avantageusement, les graduations sont en forme de V majuscule ou de triangle.

Avantageusement, les graduations comportent des labels.

Avantageusement, le ruban comporte des points de passage configurables et reconfigurables et les points de passage comportent des labels.

Avantageusement, le ruban a une longueur comprise entre 1 et 40 miles nautiques (1,85 et 74,1 km).

Avantageusement, dans un exemple, lorsque l'aéronef est un hélicoptère, l'orientation de l'axe d'approche de la piste d'atterrissage est choisie par l'équipage.

L'invention sera mieux comprise et d'autres avantages apparaîtront à la lecture de la description qui va suivre donnée à titre non limitatif et grâce aux figures annexées parmi lesquelles :
La figure 1 représente un plan de coupe vertical d'un terrain comportant une piste d'atterrissage et une première centerline selon l'art antérieur ;
La figure 2 représente un plan de coupe vertical d'un terrain comportant une piste d'atterrissage et une seconde centerline selon l'art antérieur ;
La figure 3 représente un plan de coupe vertical d'un terrain comportant une piste d'atterrissage et une centerline selon l'invention ;
La figure 4 représente, en vue de dessus, une première variante d'affichage d'une centerline selon l'invention ;
La figure 5 représente, en vue de dessus, une seconde variante d'affichage d'une centerline selon l'invention ;
La figure 6 représente, dans un plan de coupe vertical, une troisième variante d'affichage d'une centerline selon l'invention.

Le procédé selon l'invention est mis en œuvre dans un système de visualisation synthétique ou SVS embarqué sur aéronef. Celui-ci peut être un aéronef à voilure fixe. Dans ce cas, la zone d'atterrissage est une piste d'atterrissage d'aéroport. Dans un exemple, l'aéronef peut également être un hélicoptère. Dans ce cas, l'axe d'approche n'est pas nécessairement matérialisé. Il peut être défini par l'équipage ou par le système avionique en fonction de différents paramètres tels que le vent, les obstacles, .... Dans ce qui suit, l'exemple retenu est le cas de l'atterrissage sur piste d'atterrissage.

Le système SVS comporte au moins une base de données cartographique, des moyens de géolocalisation, des moyens électroniques permettant de calculer une représentation des principaux paramètres de l'aéronef, un calculateur graphique et au moins un dispositif de visualisation. Les moyens de géolocalisation sont, à titre d'exemple, de type « GPS », acronyme de « Global Positioning System » couplés/hybridés ou non avec des centrales inertielles.

L'affichage sur l'écran du dispositif de visualisation représente une vue synthétique tridimensionnelle du terrain survolé. Cette vue peut comporter une représentation synthétique d'une piste d'atterrissage. Dans ce cas, la représentation graphique comporte une ligne disposée dans l'axe de la piste, ladite ligne étant un ruban droit incliné d'un angle α compris entre un et quelques degrés par rapport à l'horizontale, ladite ligne commençant au seuil de piste. La figure 3 représente cette ligne C dans un plan de coupe vertical d'un terrain T survolé par un aéronef A à l'approche d'une piste P. Cet angle est préférentiellement d'un degré.

Cette représentation n'est donc pas plaquée au terrain et n'engendre pas de papillotement ou « flickering ». Cette centerline peut être masquée par le terrain lorsqu'elle l'intercepte. Ceci à l'avantage de donner une indication au pilote sur la présence d'un relief potentiellement dangereux. Ces cas sont rares puisqu'en général, la pente d'approche sur une piste est de l'ordre de 3 degrés. Ainsi, la centerline avec une pente à 1 degré est, dans la majorité des cas, sous l'axe d'approche de l'avion et donc toujours visible de l'aéronef. Il n'y a donc pas de passage intempestif au-dessus et au-dessous de la centerline comme cela peut être le cas avec une centerline ayant une pente égale ou voisine de la pente d'approche.

De préférence, la centerline est une droite en représentation filaire et tracée en vectoriel, et non en placage texture, afin d'éviter l'effet d'élargissement en bas de l'écran d'affichage, au niveau de la symbologie « HSI », acronyme de « Horizontal Situation Indicator ».

La centerline peut être représentée comme un ruban de quelques mètres de large. Par exemple, la largeur peut être de 4 mètres.

Sa longueur peut être limitée. La ligne a alors une longueur comprise entre 1 et 40 miles nautiques (1,85 et 74,1 km).

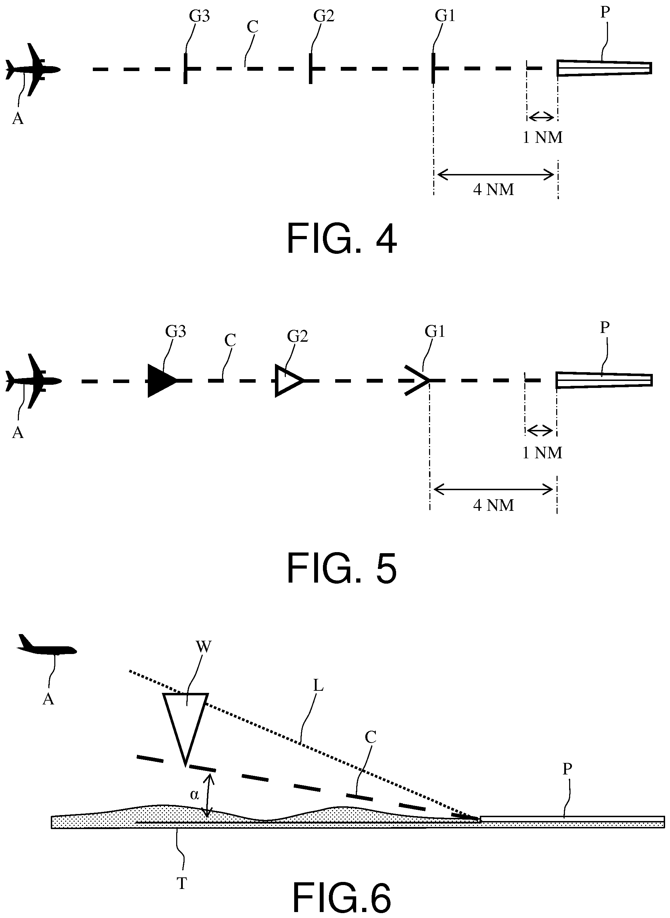

La ligne peut être représentée par un trait continu. Mais, comme on le voit sur la figure 4 qui représente une vue de dessus de la centerline, celle-ci peut également être représentée en pointillés, la distance entre deux pointillés étant constante et comprise entre 0,1 et 10 miles nautiques (0,185 et 18,5 km). Par exemple, comme représenté en figure 4, la distance entre deux pointillés peut être de 1 mile nautique. La représentation en pointillés est un bon compromis entre la lisibilité de la ligne et celle du terrain situé juste en dessous.

Elle peut également comporter des graduations équidistantes de façon que le pilote puisse comprendre approximativement la distance séparant le porteur du seuil de piste. Par exemple, la distance entre deux graduations peut être de 4 miles nautiques. Celles-ci, sont, par exemple, au nombre de trois. Ainsi, la ligne peut avoir trois graduations G1, G2 et G3 disposées respectivement à 4 miles nautiques, 8 miles nautiques et 12 miles nautiques (7,4 km, 14,8 km, et 22,2 km). Et, dans le cas où les graduations ne sont pas équidistantes, la ligne peut avoir trois graduations disposées respectivement à 3 miles nautiques, 5 miles nautiques et 10 miles nautiques (5,6 km, 9,3 km, et 18,5 km). Ces valeurs correspondent peu ou prou aux distances des marqueurs signalant l'approche finale, appelés « Inner, Middle et Outer Markers ».

Ces graduations peuvent être toutes identiques comme on le voit sur la figure 4. Il peut être avantageux de les présenter sous la forme de symboles différents les uns des autres, et positionnés sur la centerline à des distances prédéfinies, comme on le voit sur la figure 5. Ceci présente l'avantage de permettre au pilote de comprendre la distance sans avoir besoin d'afficher la distance en chiffres. Pour cela, un symbole est associé à une distance. De plus, cela permet au pilote de déterminer la distance même si un seul symbole est visible à l'écran. Ainsi, le symbole G1 représentant la plus courte distance peut être un V majuscule, le symbole G2 représentant la distance moyenne les trois traits d'un triangle et le symbole G3 représentant la plus longue distance un triangle plein.

La centerline peut également comporter des labels indiquant la valeur de chaque graduation.

La centerline peut également comporter d'autres fonctionnalités dites « 3D » pour améliorer la visualisation et la compréhension de l'axe et de la pente d'approche. Ainsi, comme on le voit sur la figure 6 qui représente une vue en coupe verticale du terrain survolé, à la place des graduations, la ligne peut comporter des points de passage W ou « User Waypoints », positionnables par le pilote en distance par rapport au seuil de piste, et dont la hauteur est calculée en fonction de la ligne représentant l'indicateur d'assiette longitudinal, encore appelé « FPRL », acronyme anglo-saxon signifiant « Flight Pitch Reference Line ».

Dans ce ces, ces points de passage peuvent également comporter des labels indiquant la distance des User Waypoints. Avantageusement, les User Waypoints sont déplaçables dynamiquement, par exemple, par certains boutons de commande.

## Revendications

1. Procédé de représentation graphique tridimensionnelle d'une piste d'atterrissage (P) sur un écran de visualisation d'un système de visualisation de bord pour aéronef (A), ladite représentation graphique étant affichée dans une vue synthétique d'un paysage extérieur, **caractérisé en ce que** ladite représentation graphique comporte un ruban (C) disposé dans l'axe d'approche de la piste d'atterrissage, ledit ruban étant un ruban droit incliné d'un angle (a) valant 1 degré par rapport à l'horizontale, ledit ruban commençant au seuil de la piste d'atterrissage et étant situé sous l'axe d'approche de l'aéronef.

2. Procédé de représentation graphique selon l'une des revendications précédentes, **caractérisé en ce que** ledit ruban est représenté en pointillés, la distance entre deux pointillés étant constante et comprise entre 0,1 et 10 miles nautiques (0,185 et 18,5 km).

3. Procédé de représentation graphique selon l'une des revendications précédentes, **caractérisé en ce que** ledit ruban comporte plusieurs graduations équidistantes (G1, G2 et G3).

4. Procédé de représentation graphique selon la revendication 3, **caractérisé en ce que** les graduations sont de forme identique.

5. Procédé de représentation graphique selon la revendication 3, **caractérisé en ce que** les graduations sont de forme différente.

6. Procédé de représentation graphique selon la revendication 5, **caractérisé en ce que** les graduations sont en forme de V majuscule ou de triangle.

7. Procédé de représentation graphique selon l'une des revendications 3 à 6, **caractérisé en ce que** les graduations comportent des labels.

8. Procédé de représentation graphique selon l'une des revendications précédentes, **caractérisé en ce que** ledit ruban comporte des points de passage (W) configurables et reconfigurables.

9. Procédé de représentation graphique selon la revendication 8, **caractérisé en ce que** les points de passage comportent des labels.

10. Procédé de représentation graphique selon l'une des revendications précédentes, **caractérisé en ce que** ledit ruban a une longueur comprise entre 1 et 40 miles nautiques (1,85 et 74,1 km).

## Patentansprüche

1. Verfahren zur dreidimensionalen grafischen Darstellung einer Landebahn (P) auf einem Anzeigeschirm eines Anzeigesystems an Bord eines Luftfahrzeugs (A), wobei die grafische Darstellung in einer synthetischen Ansicht einer Außenlandschaft angezeigt wird, **dadurch gekennzeichnet, dass** die grafische Darstellung einen Streifen (C) umfasst, der in der Anflugachse der Landebahn angeordnet ist, wobei der Streifen ein gerader Streifen ist, der in einem Winkel (α) von 1 Grad in Bezug auf die Horizontale geneigt ist, wobei der Streifen an der Schwelle der Landebahn beginnt und sich unter der Anflugachse des Luftfahrzeugs befindet.

2. Grafisches Darstellungsverfahren nach dem vorherigen Anspruch, **dadurch gekennzeichnet, dass** der Streifen punktiert dargestellt wird, wobei die Entfernung zwischen zwei Punkten konstant ist und 0,1 bis 10 Seemeilen (0,185 bis 18,5 km) ist.

3. Grafisches Darstellungsverfahren nach einem der vorherigen Ansprüche, **dadurch gekennzeichnet, dass** der Streifen mehrere Graduierungen in gleichen Abständen (G1, G2 und G3) umfasst.

4. Grafisches Darstellungsverfahren nach Anspruch 3, **dadurch gekennzeichnet, dass** die Graduierungen eine identische Form haben.

5. Grafisches Darstellungsverfahren nach Anspruch 3, **dadurch gekennzeichnet, dass** die Graduierungen eine unterschiedliche Form haben.

6. Grafisches Darstellungsverfahren nach Anspruch 5, **dadurch gekennzeichnet, dass** die Graduierungen V-förmig oder dreieckig sind.

7. Grafisches Darstellungsverfahren nach einem der Ansprüche 3 bis 6, **dadurch gekennzeichnet, dass** die Graduierungen Beschriftungen aufweisen.

8. Grafisches Darstellungsverfahren nach einem der vorherigen Ansprüche, **dadurch gekennzeichnet, dass** der Streifen konfigurierbare und umkonfigurierbare Durchgangspunkte (W) umfasst.

9. Grafisches Darstellungsverfahren nach Anspruch 8, **dadurch gekennzeichnet, dass** die Durchgangspunkte Beschriftungen umfassen.

10. Grafisches Darstellungsverfahren nach einem der vorherigen Ansprüche, **dadurch gekennzeichnet, dass** der Streifen eine Länge zwischen 1 und 40 Seemeilen (1,85 bis 74,1 km) hat.

## Claims

1. A method for three-dimensional graphical representation of a runway (P) on a display screen of an on-board display system for aircraft (A), said graphical representation being displayed in a synthetic view of an outdoor landscape, **characterised in that** said graphical representation comprises a strip (C) disposed in the approach axis of the runway, said strip being a straight strip inclined by an angle (*α*) equalling 1 degree relative to the horizontal, said strip beginning at the threshold of the runway and being located under the approach axis of the aircraft.

2. The graphical representation method as claimed in the preceding claim, **characterised in that** said strip is represented by dashes, the distance between two dashes being constant and being between 0.1 and 10 nautical miles (0.185 and 18.5 km).

3. The graphical representation method as claimed in any one of the preceding claims, **characterised in that** said strip comprises a plurality of equidistant graduations (G1, G2 and G3).

4. The graphical representation method as claimed in claim 3, **characterised in that** the graduations are of identical shape.

5. The graphical representation method as claimed in claim 3, **characterised in that** the graduations are of a different shape.

6. The graphical representation method as claimed in claim 5, **characterised in that** the graduations are in the shape of a capital V or of a triangle.

7. The graphical representation method as claimed in any one of claims 3 to 6, **characterised in that** the graduations comprise labels.

8. The graphical representation method as claimed in any one of the preceding claims, **characterised in that** said strip comprises configurable and reconfigurable waypoints (W).

9. The graphical representation method as claimed in claim 8, **characterised in that** the waypoints comprise labels.

10. The graphical representation method as claimed in any one of the preceding claims, **characterised in that** the length of said strip is between 1 and 40 nautical miles (1.85 and 74.1 km).
